# FASCICULE DE BREVET EUROPEEN

(11) **EP 0 738 429 B1**
(45) Date de publication et mention de la délivrance du brevet: **12.04.2000**
(21) Numéro de dépôt: 95939311.7
(22) Date de dépôt: 02.11.1995
(51) Int. Cl.: H01R 12/08, G06K 7/06

(54) **CONNECTEUR ELECTRIQUE POUR UNE CARTE A MEMOIRE ELECTRONIQUE COMPORTANT DES MOYENS DE RACCORDEMENT ELECTRIQUE DU TYPE A DEPLACEMENT D'ISOLANT**
ELEKTRISCHER VERBINDER FÜR EINE ELEKTRONISCHE SPEICHERKARTE MIT ELEKTRISCHEN ISOLATIONVERDRÄNGUNGSVERBINDERN
ELECTRICAL CONNECTOR FOR AN ELECTRONIC SMART CARD COMPRISING INSULATOR MOVING TYPE ELECTRICAL CONNECTION MEANS

(30) Priorité: 07.11.1994 FR 9413288
(43) Date de publication de la demande: 23.10.1996
(73) Titulaire: ITT COMPOSANTS ET INSTRUMENTS, F-92220 Bagneux (FR)
(72) Inventeur: BRICAUD, Hervé, F-39100 Dole (FR); VALCHER, Fabrice, F-39100 Dole (FR)
(74) Mandataire: Kohn, Philippe
(86) Numéro de dépôt international: FR9501437
(87) Numéro de publication internationale: WO9614671

(56) Documents cités:
- EP-A- 0 214 478
- EP-A- 0 230 674
- EP-A- 0 510 599
- EP-A- 0 516 943
- EP-A- 0 549 568
- FR-A- 2 351 514
- GB-A- 2 019 126
- US-A- 5 041 007
- US-A- 5 242 314

## Description

La présente invention concerne un connecteur électrique pour le raccordement d'une carte à mémoire électronique comportant sur une de ses faces principales une pluralité de plages de contact électrique alignées parallèlement à la direction d'introduction de la carte dans un dispositif de lecture-écriture.

L'invention concerne plus particulièrement un connecteur du type comportant un support en matériau isolant réalisé par moulage présentant une face plane supérieure parallèle à la direction générale de mise en place, par exemple par introduction, de la carte et une pluralité de conducteurs électriques en forme de lames déformables élastiquement qui s'étendent parallèlement à la direction d'introduction de la carte, chaque lame de contact comprenant une première extrémité incurvée de contact avec l'une des plages de la carte et faisant saillie hors du plan de la face supérieure du support, une partie médiane de fixation de la lame au support et une seconde extrémité de raccordement de la lame à un circuit de traitement du dispositif de lecture-écriture.

On connaît différentes conceptions d'un tel type de connecteur électrique qui se différencient les unes des autres par la forme et les dimensions du support en matériau isolant, par la forme et les dimensions des premières extrémités incurvées de contact des lames et/ou par les modes de fixation des lames au support du connecteur.

Les conceptions les plus répandues d'un tel type de connecteur sont par exemple illustrées dans le document EP-A-0.366.513 et dans le document WO-A-95/18421.

Les secondes extrémités de raccordement des lames de contact ont pour fonction de permettre le raccordement du connecteur électrique à un circuit de traitement et d'exploitation des données contenues dans la carte qui appartient à un dispositif de lecture-écriture.

Les différentes conceptions connues pour la réalisation des secondes extrémités de contact visent à permettre le raccordement électrique du connecteur avec des pistes conductrices d'une plaque à circuit imprimé, par exemple selon la technique du report à plat des composants.

A cet effet, les secondes extrémités de raccordement sont généralement réalisées sous la forme de pattes de contact qui sont brasées ou sont maintenues en appui contre des pistes conductrices correspondantes de la plaque à circuit imprimé.

Une autre conception connue consiste à réaliser les secondes extrémités de raccordement sous la forme de terminaisons ou de broches destinées à être brasées dans des trous métallisés ou raccordées par emboîtement dans des éléments de contact femelle complémentaires d'un élément indépendant de connexion lui-même relié à un câble électrique de raccordement au dispositif de lecture-écriture.

Cette dernière conception a pour avantage de permettre l'agencement du connecteur électrique destiné à recevoir la carte loin du circuit d'exploitation des données.

Par contre, cet agencement a pour inconvénient d'être coûteux dans la mesure où il nécessite de disposer d'un élément de connexion supplémentaire pour le raccordement du câble au connecteur électrique recevant la carte et dans la mesure où il nécessite des opérations d'assemblage et de montage qui sont elles-mêmes coûteuses. De plus, cette solution accroît l'encombrement du connecteur.

Il est aussi connu du document EP-A-0.214.478 ou EP-A-0 230 674 une conception d'un connecteur électrique pour carte à mémoire électronique du type mentionné précédemment qui permet le raccordement des lames conductrices du connecteur à un câble électrique, le raccordement du connecteur à un circuit de traitement d'un dispositif de lecture-écriture, dans lequel la seconde extrémité de raccordement de chacune des lames, appartenant à au moins une série de lames, comporte une fourche de raccordement susceptible de pénétrer dans l'isolant d'un câble électrique pour occuper une position de raccordement dans laquelle un contact électrique est établi avec un fil conducteur du câble selon la technique de connexion à déplacement d'isolant.

Cette technique est toutefois complexe à mettre en oeuvre car elle nécessite l'agencement d'un composant supplémentaire et sa manipulation délicate pour le presser contre le câble de raccordement afin de faire pénétrer les fourches dans le câble, ainsi qu'un outillage spécifique.

La présente invention a pour but de proposer une nouvelle conception d'un connecteur pour carte à mémoire mettant en oeuvre la technique du déplacement d'isolant et qui remédie aux inconvénients qui viennent d'être mentionnés.

Dans ce but, l'invention propose un connecteur caractérisé en ce que la fourche de raccordement de chaque lame de contact est reliée à la partie médiane de fixation de cette dernière par une branche de liaison qui assure le positionnement de la fourche de raccordement dans une position de repos avant son raccordement par déplacement d'isolant, et qui est susceptible d'être déformée pour occuper une position de raccordement différente dans laquelle la fourche de raccordement pénètre dans l'isolant du câble de raccordement.

Selon d'autres caractéristiques de modifications de l'invention :
- le support du connecteur comporte au moins un logement qui reçoit un tronçon d'extrémité du câble de raccordement ;
- il est prévu au moins une fente débouchante dans le support pour permettre le passage des fourches de raccordement ;
- le logement est agencé sous la face inférieure du support du connecteur, et la fente est formée dans l'épaisseur du support dans une partie en forme de plaque de ce dernier ;
- le logement est réalisé sous la forme d'un canal de guidage dont la section transversale est complémentaire de celle du câble de raccordement et qui est ouvert à l'une au moins de ses extrémités longitudinales pour permettre l'introduction du tronçon d'extrémité du câble de raccordement selon une direction parallèle aux lames de contact, et qui est délimité vers le bas par une plaque d'appui pour le câble ;
- le logement est réalisé venu de matière par moulage avec le support du connecteur ;
- le logement est délimité par une plaque d'appui pour le câble qui est réalisée sous la forme d'un élément rapporté sur le support du connecteur ;
- la fourche de raccordement s'étend dans un plan sensiblement perpendiculaire au plan de la face supérieure du support du connecteur, et la fourche de raccordement, en position de raccordement, fait saillie verticalement au-delà d'une face inférieure du support pour pénétrer dans l'isolant du câble ;
- en position avant raccordement, la fourche de raccordement s'étend hors du logement ;
- en position de raccordement, la branche de liaison prend appui sur la face supérieure du support du connecteur ;
- il est prévu des moyens de blocage de la fourche de raccordement par rapport au support, dans sa position de raccordement ;
- la partie médiane de fixation de la lame comporte une patte latérale d'accrochage en forme de harpon qui est reçue dans une fente correspondante du support ;
- la patte latérale d'accrochage s'étend parallèlement à la branche de liaison de la fourche de raccordement, et elle est reçue dans une fente du support qui est parallèle à la direction générale de la lame ;
- il comporte un couvercle en matériau isolant qui prend appui sur la face supérieure du support et qui comporte une série de fentes parallèles à travers chacune desquelles fait saillie une extrémité incurvée de contact d'une lame ;
- le couvercle comporte au moins un évidement qui s'étend en regard des fourches de raccordement de manière à pouvoir agir sur ces dernières, notamment au moyen d'un outil d'insertion ;
- chaque fourche de raccordement est décalée latéralement par rapport à l'extrémité de contact de la même lame d'une distance égale au quart du pas séparant deux lames de contact adjacentes ;
- le pas séparant deux lames de contact adjacentes (est égal au double du pas séparant deux fils conducteurs adjacents du câble.

D'autres particularités et avantages de l'invention apparaîtront à la lecture de la description détaillée qui va suivre pour la compréhension de laquelle on se reportera aux dessins annexés dans lesquels :
- la figure 1 est une vue en section par un plan parallèle à la direction d'introduction d'une carte d'un exemple de réalisation d'un connecteur conforme aux enseignements de l'invention ;
- la figure 2 est une vue en partielle en section transversale selon la ligne 2-2 de la figure 1 qui illustre deux fourches de raccordement appartenant à une série de lames, en position de raccordement ;
- la figure 3 est une vue similaire à celle de la figure 2, en section selon la ligne 3-3 de la figure 1, qui illustre deux fourches de raccordement en position avant raccordement ;
- la figure 4 est une vue schématique en perspective du connecteur illustré aux figures 1 à 3 ;
- la figure 5 est une vue schématique en perspective et à plus grande échelle qui illustre la forme d'une lame de contact conforme aux enseignements de l'invention et une représentation d'une même lame de contact avant les opérations de pliage nécessaires à son conformage ;
- la figure 6 est une vue en élévation d'un second mode de réalisation d'un connecteur conforme aux enseignements de l'invention ; et
- la figure 7 est une vue schématique en perspective éclatée d'un troisième mode de réalisation.

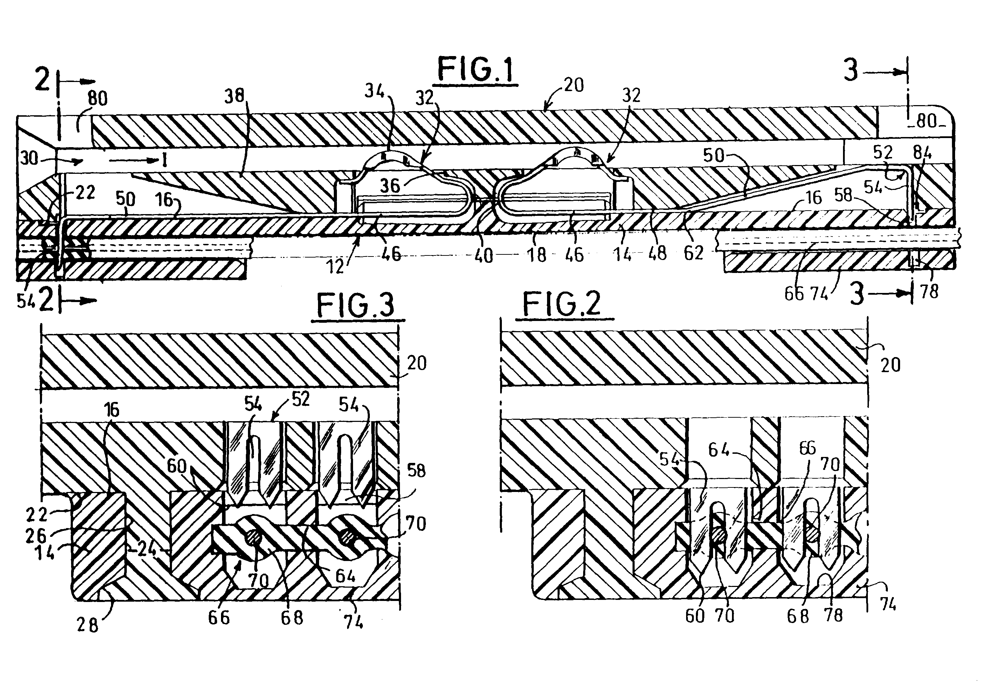

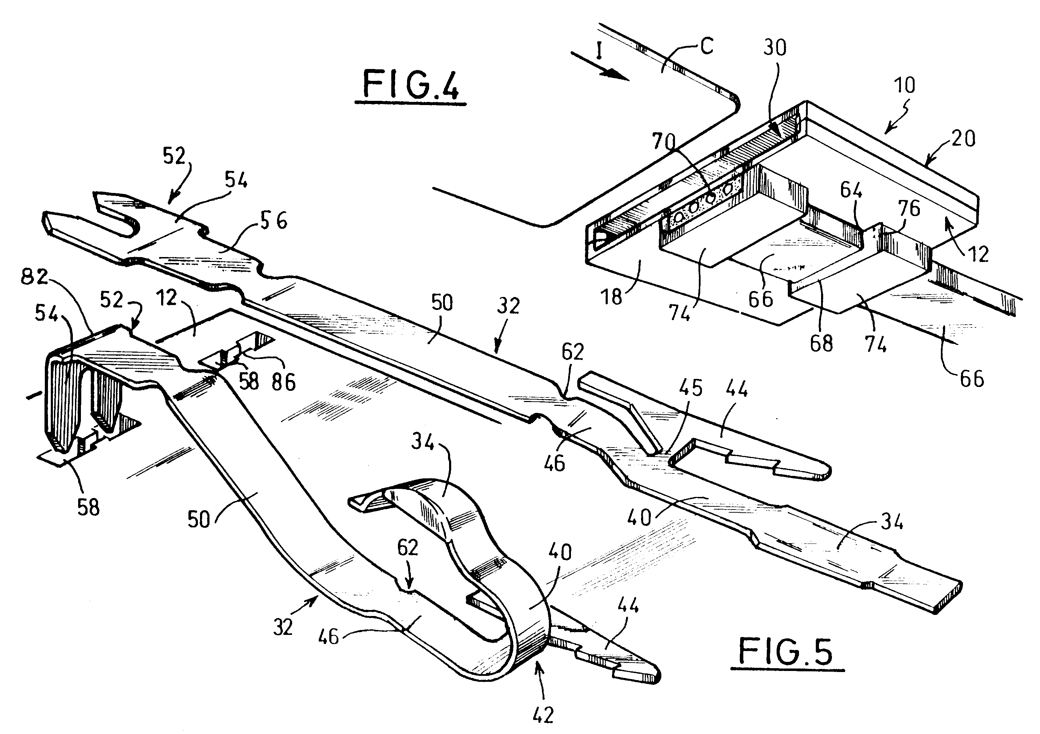

On a représenté aux figures 1 à 4 un connecteur électrique 10 pour le raccordement des plages de contact électrique d'une carte à mémoire électronique C (voir figure 4) avec un dispositif de lecture-écriture (non représenté) comportant un circuit de traitement des données contenues dans la carte C.

Le connecteur 10 est pour l'essentiel constitué par un support en matériau isolant 12 en forme générale de plaque 14.

Le support 12 délimite une face supérieure plane 16 et une face inférieure plane parallèle 18.

Le connecteur 10 comporte également un couvercle 20 dont des portions de la surface inférieure plane 22 prennent appui sur la face supérieure 16 du support 12, et qui est fixé à ce dernier par des pions 24 qui traversent des trous 26 du support en forme de plaque 14 et dont les têtes 28 sont serties à chaud (voir figures 2 et 3).

Le couvercle 20 délimite un logement en forme de couloir 30 qui est destiné à recevoir la carte C qui peut y être introduite selon une direction I qui est parallèle aux plages de contact (non représentées) de la carte C.

Selon une technique connue, qui est par exemple illustrée dans le document WO-A-95/18421, le support 12 en forme de plaque 14 sert de support à deux séries de lames déformables élastiquement 32 qui constituent une pluralité de conducteurs électriques pour le raccordement des plages de la carte C à un circuit de traitement des données contenues dans la carte, lorsque cette dernière est en position introduite dans le couloir 30.

Selon une conception connue, chaque lame 32, qui est réalisée par découpage et pliage, présente une forme générale allongée qui s'étend parallèlement à la direction I d'introduction de la carte C.

Chaque lame 32 comporte une première extrémité incurvée de contact 34 qui s'étend au-dessus de la face supérieure 16 du support 12 en forme de plaque 14 et qui fait saillie dans le couloir 30 à travers une ouverture correspondante 36 formée dans la partie inférieure 38 du couvercle 20 pour venir établir un contact avec une plage correspondante de la carte C lorsque cette dernière est en position introduite dans le couloir 30.

Chacune des extrémités de contact 34 est reliée par une branche en forme d'épingle à cheveux 40 à une partie médiane de fixation 42 qui comporte une patte 44 d'accrochage en forme de harpon et une patte horizontale d'appui 46.

Chaque patte d'accrochage 44 en forme de harpon est reliée à la patte d'appui 46 par une traverse 45.

Selon la technique connue illustrée dans le document WO-A-95/18421, chacune des pattes 44 en forme de harpon est prévue pour être reçue dans une fente complémentaire du support 14 dans laquelle elle est introduite selon la direction parallèle à la direction I, et chacune des pattes d'appui 46 prend partiellement appui sur une portion en vis-à-vis de la face supérieure 16 du support 12 en forme de plaque 14 contre laquelle elle est pincée par une portion de surface en vis-à-vis 48 de la face inférieure 22 du couvercle 20 de manière à assurer un encastrement de la lame entre la plaque 14 et le couvercle 20.

Conformément à l'invention, chaque lame de contact 32 se prolonge longitudinalement par une branche de liaison 50 dont le tronçon d'extrémité libre 52 est réalisé sous la forme d'une fourche 54 de raccordement du type à déplacement d'isolant.

Comme on peut le voir à la partie droite de la figure 1 ainsi que sur le schéma de la figure 5, chaque branche de liaison 50 s'étend initialement, c'est-à-dire préalablement aux opérations de raccordement du connecteur avec un câble électrique, dans une position de repos dans laquelle elle forme un angle aigu avec la face supérieure 16 de la plaque 14 au-dessus de laquelle elle s'étend.

Le tronçon d'extrémité en forme de fourche 54 est replié sensiblement à 90° par rapport à la partie terminale horizontale 56 de la branche de liaison 50 de manière à s'étendre verticalement selon une direction perpendiculaire à la face supérieure 16 en regard d'une fente 58 de dimensions complémentaires de celles de la fourche 54 qui est une fente débouchante formée dans la plaque 14 du support 12.

Dans la position de repos illustrée à la figure 5 à la partie droite de la figure 1, ainsi qu'à la figure 3, les pointes inférieures 60 des branches de la fourche 54 s'étendent sensiblement dans le plan de la face inférieure 18.

Chacune des branches de liaison 50 est susceptible d'être déformée élastiquement, autour d'un axe d'articulation constitué par sa zone de raccordement 62, avec la patte d'appui 46 pour occuper une position dite de raccordement qui est illustrée à la partie gauche de la figure 1 et à la figure 2 dans laquelle la branche de liaison 50 s'étend horizontalement dans le prolongement de la patte d'appui 46 et prend appui sur la face supérieure 16 du support 12 en forme de plaque 14.

Dans cette position de raccordement, chacune des fourches 54 s'étend verticalement au-delà de la face inférieure 18 de la plaque 14 à l'intérieur d'un logement correspondant 64 qui est prévu pour recevoir un tronçon d'un câble électrique plat 66 qui est constitué pour l'essentiel par un isolant plat 68 dans lequel sont noyés des fils électriques conducteurs 70, selon une technique connue.

Comme on peut le constater sur la figure 5, chaque fourche 54 est décalée latéralement par rapport à l'extrémité de contact 34. Ce décalage est égal à p/4, p étant le pas séparant deux lames adjacentes. Le pas séparant les fils conducteurs du câble 66 est égal à p/2.

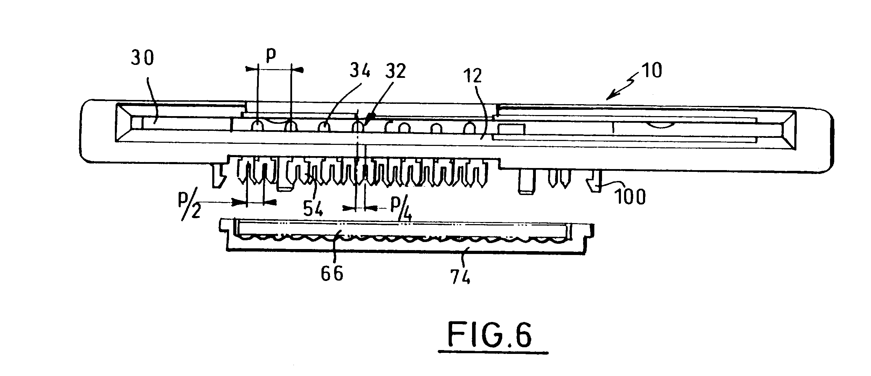

Comme les extrémités de contact 34 des lames des deux séries de lames sont alignées deux à deux, on obtient un décalage de p/2 entre les fourches des lames d'une série à l'autre, c'est-à-dire un décalage égal à celui des fils conducteurs 70 (voir figure 6), tout en ayant recours à un seul et même modèle de lame 32 pour les deux séries opposées.

Chaque logement 64 est un canal longitudinal ouvert à ses deux extrémités dont la section transversale est sensiblement complémentaire de celle de l'isolant 68 du câble 66 et qui est ouvert à ses deux extrémités longitudinales.

Le logement 64 est délimité vers le haut par la face inférieure 18 de la plaque 14 du support 12 et vers le bas par une paroi inférieure 74 réalisée venue de matière par moulage avec le support 12 auquel elle est reliée par deux cloisons latérales 76 et qui constitue une plaque d'appui pour le câble lors de l'insertion des fourches 54.

Chacune des parois 74 comporte des encoches 78 en regard des fentes 58 afin de permettre, comme cela est illustré aux figures 1 et 2, aux extrémités en forme de pointe 60 des fourches 54 d'y être reçues lorsque les fourches de raccordement sont en position de raccordement après avoir percé l'isolant 68.

Afin de permettre d'agir sur les fourches à déplacement d'isolant 54, verticalement de haut en bas en considérant la figure 1, le couvercle 20 comporte au voisinage de ses deux extrémités longitudinales opposées, à gauche et à droite en considérant la figure 1, deux évidements ou dégagements 80 qui permettent le passage d'un outil de connexion par déplacement d'isolant (non représenté).

Le raccordement du connecteur au câble 66 en nappe, comme cela est illustré sur la figure 4, s'effectue de la manière suivante.

Le connecteur est livré selon un agencement selon lequel toutes les fourches de raccordement 54 sont dans une position avant raccordement conforme à la position illustrée à la figure 5, à la partie droite de la figure 1 et à la figure 3.

L'utilisateur introduit alors le câble plat 66 dans les deux logements 64 prévus à cet effet et il procède au raccordement électrique par déplacement d'isolant en venant insérer les fourches à déplacement d'isolant 54 à travers l'isolant 68 des câbles 66 jusqu'à ce que les fourches de raccordement 54 occupent leur position de raccordement illustrée à la partie gauche de la figure 1 ainsi qu'à la figure 2.

En position de raccordement, les coudes 82 reliant les tronçons d'extrémité 52 en forme de fourches 54 aux branches de liaison 50, 56 s'étendent en regard d'un dégagement 84 prévu à cet effet dans le couvercle 20 de manière à s'opposer à tout échappement intempestif, verticalement vers le haut, d'une fourche de raccordement 54 après son raccordement. Cette caractéristique est obtenue grâce au flambement de la branche 50 lors de l'insertion avec pivotement autour de la zone 62.

Lors de la phase d'insertion, le guidage de chaque fourche 54 dans la fente 58 est facilité grâce à des nervures de guidage 86 agencées verticalement le long des parois verticales parallèles et opposées de chaque fente 58 (voir figure 5).

L'opération de raccordement du connecteur sur un ou plusieurs câbles plats est donc particulièrement simple dans la mesure où elle ne fait appel à aucun composant supplémentaire tel qu'un élément de connexion complémentaire.

Dans le premier mode de réalisation qui vient d'être décrit en référence aux figures 1 à 5, le logement 64 délimité par la plaque d'appui 74 est réalisé venu de matière par moulage avec le support 12.

Dans le second mode de réalisation illustré à la figure 6, sur laquelle des éléments identiques ou similaires à ceux du premier mode de réalisation sont désignés par les mêmes chiffres de référence, la plaque d'appui 74 pour le câble en nappe 66 est réalisée sous la forme d'un élément rapporté qui, sur la figure 6, est illustré en position éclatée par rapport au connecteur 10, c'est à dire avant son montage.

Selon ce second mode de réalisation, l'opération de raccordement des fourches 54 par insertion et déplacement d'isolant dans le câble 66 s'effectue également par déplacement relatif des fourches 54 par rapport au support 12 mais par déplacement relatif du câble 66, sur lequel on agit par l'intermédiaire de la plaque d'appui 74, par rapport aux fourches de raccordement 54 qui sont dans ce cas fixes par rapport au support 12.

Le déplacement relatif de la plaque 74 par rapport au connecteur 10 en vue de son montage s'effectue selon la direction indiquée par la flèche de la figure 6 et se poursuit jusqu'à ce que les bords en forme de nervure de la plaque 74 viennent s'enclencher élastiquement dans les crochets 100 formés sur la face inférieure du connecteur 10.

Ce mode de réalisation permet notamment l'adaptation d'un même connecteur à des câbles plats d'épaisseurs différentes.

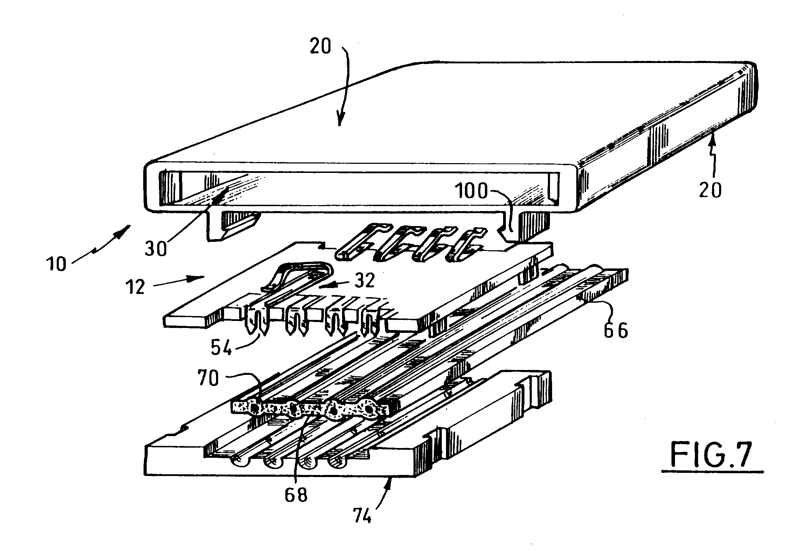

Dans le troisième mode de réalisation illustré sur la figure 7, sur laquelle des composants identiques ou similaires à ceux représentés aux figures 1 à 6 sont désignés par les mêmes chiffres de référence, la plaque d'appui 74 est également réalisée sous la forme d'un élément rapporté amovible qui, en position montée (non représentée), vient s'emboîter élastiquement dans les crochets 100.

Dans ce mode de réalisation, le support 12 est également réalisé sous la forme d'un élément rapporté par rapport au couvercle 20 qui délimite le couloir 30 d'introduction de la carte C. La plaque d'appui 74 constitue simplement un moyen de fixation et d'assemblage du support 12 sous la face inférieure du couvercle 20 et dans laquelle les fourches 54 peuvent être reliées aux lames de contact 32 selon le même agencement que dans le premier mode de réalisation, l'insertion finale par déplacement d'isolant s'effectuant alors en déplaçant les fourches de raccordement 54 par rapport au câble 66 soutenu par la plaque d'appui 74.

Cette dernière conception a pour avantage de permettre d'utiliser, sous la forme de sous-ensembles, des supports 12 avec leurs lames de contact 32 de différents modèles, et notamment des supports 12 comportant des moyens de détection de la présence de la carte et/ou de détection de la fin de course d'introduction de la carte dans le connecteur.

Ces moyens de détection peuvent par exemple être constitués par un commutateur (non représenté sur les figures) dont le raccordement au circuit de traitement peut également être assuré au moyen d'une fourche de raccordement 54 (voir figure 6) du type à déplacement d'isolant.

Selon une variante non représentée, et pour assurer la fixation de l'ensemble du connecteur sur un élément de structure d'un dispositif, il est possible de prévoir sur le couvercle 20 des oeillets latéraux recevant par exemple des vis de fixation ou des harpons de fixation appartenant à l'élément de structure.

L'invention a été décrite, à titre non limitatif, dans le cas où la carte C est introduite dans un dispositif de lecture-écriture selon une direction I parallèle au plan de la carte C.

L'invention trouve bien entendu à s'appliquer dans le cas où la carte se déplace selon un trajet plus complexe en vue d'un "atterrissage" de la carte selon une direction sensiblement perpendiculaire au plan de la carte, ainsi que dans le cas où le connecteur, et/ou les lames de contact, se déplacent par rapport à la carte.

L'invention n'est pas limitée à l'intégration des moyens de guidage de la carte au connecteur, ces moyens de guidage et de positionnement de la carte pouvant être incorporés à l'appareil équipé d'un connecteur selon l'invention.

Les termes supérieur et inférieur ont été utilisés dans le cadre de la présente description pour simplifier l'exposé de l'invention mais ils ne doivent nullement être interprétés comme des termes limitatifs, l'agencement dans l'espace d'un connecteur selon l'invention pouvant être quelconque.

## Revendications

1. Connecteur électrique (10) pour le raccordement d'une carte à mémoire électronique (C) comportant sur une de ses faces principales une pluralité de plages de contact électrique alignées, du type comportant un support (12, 14) en matériau isolant, réalisé par moulage, présentant une face plane supérieure (16) et une pluralité de conducteurs électriques en forme de lames déformables élastiquement (32) qui s'étendent parallèlement à la direction des plages de contact de la carte (C), chaque lame (32) de contact comprenant une première extrémité incurvée de contact (34) avec l'une des plages de la carte (C) et faisant saillie hors du plan de la face supérieure du support, une partie médiane de fixation (42) de la lame (32) au support (12) et une seconde extrémité de raccordement de la lame (32) à un circuit de traitement du dispositif de lecture-écriture, du type dans lequel la seconde extrémité de raccordement (54) de chacune des lames (32), appartenant à au moins une série de lames (32), comporte une fourche de raccordement (54) susceptible de pénétrer dans l'isolant (68) d'un câble électrique (66) de raccordement du connecteur (10) pour occuper une position de raccordement dans laquelle un contact électrique est établi avec un fil (70) conducteur du câble (66) selon la technique de connexion à déplacement d'isolant, caractérisé en ce que la fourche (54) de raccordement de chaque lame de contact (32) est reliée à la partie médiane de fixation (42) de cette dernière par une branche de liaison (50) qui assure le positionnement de la fourche de raccordement (54) dans une position de repos avant son raccordement par déplacement d'isolant, et qui est susceptible d'être déformée pour occuper une position de raccordement différente dans laquelle la fourche de raccordement (54) pénètre dans l'isolant (68) du câble de raccordement (66).

2. Connecteur électrique selon la revendication 1, caractérisé en ce que le support (12, 14) du connecteur comporte au moins un logement (64) qui reçoit un tronçon d'extrémité du câble de raccordement (66).

3. Connecteur électrique selon la revendication 2, caractérisé en ce qu'il est prévu au moins une fente débouchante (58) dans le support (12, 14) pour permettre le passage des fourches de raccordement (54).

4. Connecteur électrique selon la revendication 3 prise en combinaison avec la revendication 2, caractérisé en ce que le logement (64) est agencé sous la face inférieure (18) du support (12) du connecteur (10), et en ce que la fente (58) est formée dans l'épaisseur du support dans une partie en forme de plaque (14) de ce dernier.

5. Connecteur électrique selon l'une des revendications 3 ou 4, caractérisé en ce que le logement (64) est réalisé sous la forme d'un canal de guidage dont la section transversale est complémentaire de celle du câble de raccordement (66) et qui est ouvert à l'une au moins de ses extrémités longitudinales pour permettre l'introduction du tronçon d'extrémité du câble de raccordement (66) selon une direction parallèle aux lames de contact (32), et qui est délimité vers le bas par une plaque (74) d'appui pour le câble (66).

6. Connecteur électrique selon l'une quelconque des revendications 2 à 5, caractérisé en ce que le logement (64, 74) est réalisé venu de matière par moulage avec le support (12) du connecteur.

7. Connecteur électrique selon l'une quelconque des revendications 2 à 5, caractérisé en ce que le logement est délimité par une plaque d'appui (74) pour le câble (66) qui est réalisée sous la forme d'un élément rapporté sur le support (12) du connecteur.

8. Connecteur électrique selon l'une quelconque des revendications 2 à 7, caractérisé en ce que la fourche de raccordement (54) s'étend dans un plan sensiblement perpendiculaire au plan de la face supérieure (16) du support (12, 14) du connecteur, et en ce que la fourche de raccordement (54), en position de raccordement, fait saillie verticalement au-delà d'une face inférieure (18) du support pour pénétrer dans l'isolant (68) du câble (66).

9. Connecteur électrique selon l'une quelconque des revendications 2 à 8, caractérisé en ce que, en position avant raccordement, la fourche (54) de raccordement s'étend hors du logement (64).

10. Connecteur électrique selon l'une quelconque des revendications 1 à 9, caractérisé en ce que, en position de raccordement, la branche de liaison (50) prend appui sur la face supérieure (16) du support (12, 14) du connecteur (10).

11. Connecteur électrique selon l'une quelconque des revendications précédentes, caractérisé en ce qu'il est prévu des moyens (84) de blocage de la fourche de raccordement (54) par rapport au support (12), dans sa position de raccordement.

12. Connecteur électrique selon l'une quelconque des revendications précédentes, caractérisé en ce que la partie médiane de fixation (42) de la lame (32) comporte une patte latérale d'accrochage (44) en forme de harpon qui est reçue dans une fente correspondante du support (12).

13. Connecteur électrique selon la revendication 12, caractérisé en ce que la patte latérale d'accrochage (44) s'étend parallèlement à la branche de liaison (50) de la fourche de raccordement (54), et en ce qu'elle est reçue dans une fente du support qui est parallèle à la direction générale de la lame (32).

14. Connecteur électrique selon l'une quelconque des revendications précédentes, caractérisé en ce qu'il comporte un couvercle (20) en matériau isolant qui prend appui sur la face supérieure (16) du support (12, 14) et qui comporte une série de fentes parallèles (36) à travers chacune desquelles fait saillie une extrémité incurvée de contact (34) d'une lame (32).

15. Connecteur électrique selon la revendication 14, caractérisé en ce que le couvercle (20) comporte au moins un évidement (80) qui s'étend en regard des fourches de raccordement (54) de manière à pouvoir agir sur ces dernières (54), notamment au moyen d'un outil d'insertion.

16. Connecteur électrique selon l'une quelconque des revendications précédentes, caractérisé en ce que chaque fourche de raccordement (54) est décalée latéralement par rapport à l'extrémité de contact (34) de la même lame (32) d'une distance (p/4) égale au quart du pas (p) séparant deux lames de contact adjacentes (32).

17. Connecteur électrique selon la revendication 16, caractérisé en ce que le pas (p) séparant deux lames de contact adjacentes (32) est égal au double du pas (p/2) séparant deux fils conducteurs adjacents (70) du câble (66).

## Patentansprüche

1. Elektrischer Verbinder (10) für die Verbindung einer elektronischen Speicherkarte (C), umfassend auf einer seiner Hauptseiten eine Mehrzahl von ausgerichteten elektrischen Kontaktbereichen, der Art, die eine Halterung (12,14) aus einem isolierenden Material umfaßt, realisiert durch Einspritzgießen, aufweisend eine ebene obere Seite (16) und eine Mehrzahl von elektrischen Leitern in der Form von elastisch verformbaren Lamellen (32), die sich parallel zur Richtung der Kontaktbereiche der Karte (C) erstrecken, wobei jede Kontaktlamelle (32) ein erstes gebogenes Ende zum Kontakt (34) mit einem der Bereiche der Karte (C) umfaßt und über die Ebene der Oberseite der Halterung hinausragt, einen mittleren Fixierungsteil (42) der Lamelle (32) an der Halterung (12) und ein zweites Verbindungsende der Lamelle (32) mit einem Bearbeitungsschaltkreis der Lese-Schreibeinrichtung, derart, bei der das zweite Verbindungsende (54) einer jeden Lamelle (32), das Teil zumindest einer Serie von Lamellen (32) ist, eine Verbindungsgabel (54) umfaßt, die geeignet ist, in die Isolierung (68) eines elektrischen Kabels (66) einzudringen, zur Verbindung des Verbinders (10), um eine Verbindungsposition einzunehmen, in der ein elektrischer Kontakt mit einer Ader (70) des Kabels (60) hergestellt wird, entsprechend der Technologie der Verbindung durch Verdrängung des Isolators, dadurch gekennzeichnet, daß die Gabel (54) zur Verbindung einer jeden Kontaktlamelle (32) mit dem mittleren Befestigungsteil (42) der letzteren verbunden ist, über einen Verbindungsast (50), der die Positionierung der Verbindungsgabel (54) in einer Ruheposition vor der Verbindung durch Verdrängung des Isolators sicherstellt, und der verformbar ist, um eine unterschiedliche Verbindungsposition einzunehmen, in der die Verbindungsgabel (54) in den Isolator (68) des Verbindungskabels (66) eindringt.

2. Elektrischer Verbinder nach Anspruch 1, dadurch gekennzeichnet, daß die Halterung (12, 14) des Verbinders zumindest eine Aufnahme (64) aufweist, die ein Endstück des Verbindungskabels (66) aufnimmt.

3. Elektrischer Verbinder nach Anspruch 2, dadurch gekennzeichnet, daß zumindest ein Fenster vorgesehen ist, daß sich in der Halterung (12, 14) öffnet (58) um einen Durchtritt (54) zu ermöglichen.

4. Elektrischer Verbinder nach Anspruch 3 in Kombination mit Anspruch 2, dadurch gekennzeichnet, daß die Aufnahme (64) unter der Unterseite (18) der Halterung (12) des Verbinders (10) angeordnet ist, und dadurch, daß das Fenster (58) in der Dicke der Halterung in einem Teil in der Form einer Platte (14) der letzteren ausgebildet ist.

5. Elektrischer Verbinder nach einem der Ansprüche 3 oder 4, dadurch gekennzeichnet, daß die Aufnahme (64) in der Form eines Führungskanals realisiert ist, dessen Querschnitt komplementär zu demjenigen des Verbindungskabels (66) ist und der an zumindest einer seiner Längsenden offen ist, um das Einführen des Endteiles des Verbindungskabels (66) in eine Richtung parallel zu den Kontaktlamellen (32) zu ermöglichen, und der nach unten durch eine Platte (74) zur Unterstützung des Kabels (66) begrenzt ist.

6. Elektrischer Verbinder nach einem der Ansprüche 2 bis 5, dadurch gekennzeichnet, daß die Aufnahme (64, 74) aus einem Material durch Einspritzgießen mit der Halterung (12) des Verbinders realisiert ist.

7. Elektrischer Verbinder nach einem der Ansprüche 2 bis 5, dadurch gekennzeichnet, daß die Aufnahme durch eine Halteplatte (74) für das Kabel (66) begrenzt ist, die in der Form eines Elementes realisiert ist, welches an die Halterung (12) des Verbinders angepaßt ist.

8. Elektrischer Verbinder nach einem der Ansprüche 2 bis 7, dadurch gekennzeichnet, daß die Verbindungsgabel (54) sich in einer Ebene erstreckt, die im wesentlichen rechtwinklig zur Ebene der oberen Seite (16) der Halterung (12, 14) des Verbinders ist und dadurch, daß die Verbindungsgabel (54) in Verbindungsposition vertikal über eine untere Seite (18) der Halterung hinausragt um in die Isolierung (68) des Kabels (66) einzudringen.

9. Elektrischer Verbinder nach einem der Ansprüche 2 bis 8, dadurch gekennzeichnet, daß sich die Verbindungsgabel (54) in der Position vor der Verbindung über die Aufnahme (64) hinaus erstreckt.

10. Elektrischer Verbinder nach einem der Ansprüche 1 bis 9, dadurch gekennzeichnet, daß der Verbindungsast (50) in Verbindungsposition in Anlage gegen die obere Seite (16) der Halterung (12, 14) des Verbinders (10) kommt.

11. Elektrischer Verbinder nach einem der vorhergehenden Ansprüche , dadurch gekennzeichnet, daß Einrichtungen (84) zur Blockierung der Verbindungsgabel (54) gegenüber der Halterung (12) vorgesehen sind, in der Verbindungsposition.

12. Elektrischer Verbinder nach einem der vorhergehenden Ansprüche, dadurch gekennzeichnet, daß der mittlere Befestigungsteil (42) der Lamelle (32) einen seitlichen Verriegelungsfuß (44) in der Form einer Harpune umfaßt, der von einem entsprechenden Fenster der Halterung (12) aufgenommen wird.

13. Elektrischer Verbinder nach Anspruch 12, dadurch gekennzeichnet, daß der seitliche Verriegelungsfuß (44) sich parallel zum Verbindungsast (50) der Verbindungsgabel (54) erstreckt und dadurch, daß er von einem Fenster der Halterung aufgenommen wird, der parallel zur allgemeinen Richtung der Lamelle (32) ist.

14. Elektrischer Verbinder nach einem der vorhergehenden Ansprüche, dadurch gekennzeichnet, daß er eine Abdeckung (20) aus einem isolierenden Material umfaßt, die in Anlage gegen die obere Seite (16) der Halterung (12, 14) kommt und die eine Reihe von parallelen Fenstern (36) aufweist, durch die jeweils ein gebogenes Kontaktende (34) einer Lamelle (32) hindurchreicht.

15. Elektrischer Verbinder nach Anspruch 14, dadurch gekennzeichnet, daß die Abdeckung (20) zumindest eine Ausnehmung (80) umfaßt, die sich gegenüber der Verbindungsgabeln (54) in einer Weise erstreckt, um eine Einwirkung auf die letzteren (54), insbesondere durch Einführwerkzeuge zu ermöglichen.

16. Elektrischer Verbinder nach einem der vorhergehenden Ansprüche, dadurch gekennzeichnet, daß jede Verbindungsgabel (54) seitlich bezüglich des Kontaktendes (34) derselben Lamelle (32) über einen Abstand (p/4) versetzt ist, der einem Viertel des Abstandes (p) entspricht, der zwei nebeneinander liegende Kontaktlamellen (32) voneinander trennt.

17. Elektrischer Verbinder nach Anspruch 16, dadurch gekennzeichnet, daß der Abstand (p), der zwei nebeneinander liegende Kontaktlamellen trennt, gleich oder doppelt so groß wie der Abstand (p/2) ist, der zwei nebeneinander liegende Adern (70) des Kabels (66) voneinander trennt.

## Claims

1. Electrical connector (10) for the connection of an electronic memory card (C) including, on one of its main faces, a number of aligned electrical contact pads, of the type including a support (12, 14) made of insulating material, produced by moulding, having an upper plane face (16) and a number of electrical conductors in the form of elastically deformable blades (32) which extend parallel to the direction of the contact pads on the card (C), each contact blade (32) comprising a first incurvate end (34) for contacting one of the pads on the card (C) and projecting from the plane of the upper face of the support, a central part (42) for fixing the blade (32) to the support (12) and a second end for connecting the blade (32) to a processing circuit of the read/write device, of the type in which the second connecting end (54) of each of the blades (32), belonging to at least one series of blades (32), includes a connecting fork (54) capable of penetrating the insulation (68) of an electrical cable (66) for connection of the connector (10) in order to occupy a connection position in which electrical contact with a conducting wire (70) of the cable (66) is established using the insulation-displacement connection technique, **characterised in that** the connecting fork (54) of each contact blade (32) is connected to the central fixing part (42) of the latter by a linking branch (50) which positions the connecting fork (54) in a rest position before it is connected by insulation displacement and which is capable of being deformed in order to occupy a different connection position in which the connecting fork (54) penetrates the insulation (68) of the connecting cable (66).

2. Electrical connector according to Claim 1, **characterised in that** the support (12, 14) of the connector includes at least one housing (64) which receives an end section of the connecting cable (66).

3. Electrical connector according to Claim 2, **characterised in that** at least one emerging slot (58) is provided in the support (12, 14) to allow passage of the connecting forks (54).

4. Electrical connector according to Claim 3, taken in combination with Claim 2, **characterised in that** the housing (64) is arranged below the lower face (18) of the support (12) of the connector (10), and in that the slot (58) is formed in the thickness of the support, in a part of the latter, in the form of a plate (14).

5. Electrical connector according to one of Claims 3 or 4, **characterised in that** the housing (64) is made in the form of a guide channel whose cross section is complementary to that of the connecting cable (66), and which is open at at least one of its longitudinal ends to allow insertion of the end section of the connecting cable (66), in a direction parallel to the contact blades (32), and which is delimited at the bottom by a supporting plate (74) for the cable (66).

6. Electrical connector according to any one of Claims 2 to 5, **characterised in that** the housing (64, 74) is made when moulding the support (12) of the connector.

7. Electrical connector according to any one of Claims 2 to 5, **characterised in that** the housing is delimited by a supporting plate (74) for the cable (66), which supporting plate is made in the form of an element attached to the support (12) of the connector.

8. Electrical connector according to any one of Claims 2 to 7, **characterised in that** the connecting fork (54) extends in a plane substantially perpendicular to the plane of the upper face (16) of the support (12, 14) of the connector, and in that the connecting fork (54), in the connection position, projects vertically beyond a lower face (18) of the support in order to penetrate the insulation (68) of the cable (66).

9. Electrical connector according to any one of Claims 2 to 8, **characterised in that,** in the position prior to connection, the connecting fork (54) extends out of the housing (64).

10. Electrical connector according to any one of Claims 1 to 9, **characterised in that,** in the connection position, the linking branch (50) rests on the upper face (16) of the support (12, 14) of the connector (10).

11. Electrical connector according to any one of the preceding Claims, **characterised in that** means (84) for locking the connecting fork (54) with respect to the support (12), in its connection position, are provided.

12. Electrical connector according to any one of the preceding Claims, **characterised in that** the central fixing part (42) of the blade (32) includes a harpoon-shaped latching foot (44) which is received in a corresponding slot in the support (12).

13. Electrical connector according to Claim 12, **characterised in that** the lateral latching foot (44) extends parallel to the linking branch (50) of the connecting fork (54), and in that it is received in a slot in the support which is parallel to the general direction of the blade (32).

14. Electrical connector according to any one of the preceding Claims, **characterised in that** it includes a cover (20) made of insulating material which rests on the upper face (16) of the support (12, 14) and which includes a series of parallel slots (36) through each of which projects an incurvate contact end (34) of a blade (32).

15. Electrical connector according to Claim 14, **characterised in that** the cover (20) includes at least one recess (80) which extends facing the connecting forks (54) so as to be able to act on the latter (54), especially by means of an insertion tool.

16. Electrical connector according to any one of the preceding Claims, **characterised in that** each connecting fork (54) is offset laterally with respect to the contact end (34) of the same blade (32) by a distance (p/4) equal to one quarter of the pitch (p) separating two adjacent contact blades (32).

17. Electrical connector according to Claim 16, **characterised in that** the pitch (p) separating two adjacent contact blades (32) is equal to twice the pitch (p/2) separating two adjacent conducting wires (70) of the cable (66) .
